# EUROPEAN PATENT APPLICATION

(11) **EP 1 752 904 A2**
(43) Date of publication of application: **14.02.2007**
(21) Application number: 06116513.0
(22) Date of filing: 03.07.2006
(51) Int. Cl.: G06F 21/20

(54) **Information processing apparatus and authentication processing method**

(30) Priority: 19.07.2005 JP 2005208785
(71) Applicant: KABUSHIKI KAISHA TOSHIBA, Tokyo 105-8001 (JP)
(72) Inventor: Ueda, Kunio, Intellectual Property Division, Minato-ku, Tokyo 105-8001 (JP)
(74) Representative: Henkel, Feiler & Hänzel

(57) **Abstract**

According to one embodiment, an information processing apparatus includes: an authenticating section that authenticates a user; an inputting section that allows the user to input authentication information used for performing the authentication by the authenticating section; an upper-limit retaining section that retains an upper limit indicating a maximum number to which the number of consecutive failures of the authentication is allowed; and an upper-limit decreasing section that decreases the upper limit when trials of the authentication consecutively fail until the number of failures reaches the upper limit.

## Description

### CROSS-REFERENCE TO RELATED APPLICATIONS

This application is based upon and claims the benefit of priority from Japanese Patent Application No. 2005-208785, filed on July 19, 2005, the entire contents of which are incorporated herein by reference.

### BACKGROUND

### 1. Field

One embodiment of the invention relates to a security technique in which the number of password inputs that can be consecutively tried, or the like is adequately restricted.

### 2. Description of the Related Art

Recently, various types of personal computers such as a notebook type and a desktop type are widely used. In such personal computers, usually, the user is authenticated on the basis of, for example, input of a password.

With respect to the user authentication by input of a password, various security measures have been proposed. For example, when input of an erroneous password is repeated until the number of input reaches a specified value, the next and subsequent boot times are intentionally prolonged, and the degree of error in an erroneous password is checked, and, when the degree of error is extremely large, the retry of input of a password is not allowed (for example, see Japanese Patent Application Publication (KOKAI) No. 2004-102635 and No. Hei. 11-259425).

### SUMMARY

In a security measure of this kind, a balance between the following two countermeasures must be considered. In the case where a valid user erroneously inputs a password by a simple mistake, a countermeasure must be taken so that convenience to the valid user is not impaired by strictly restricting reentry of a password. In the case where an invalid user inputs an erroneous password at a guess from, for example, the birthday of the valid user, a countermeasure must be taken so that the security is reduced by easily allowing reentry of a password. Namely, it is not preferable that the system fixedly retains thresholds such as the allowable number of erroneous inputs, and the degree of error.

The present invention has been made in view of above circumstances. It is an object of the invention to provide an information processing apparatus and an authentication processing method which realize a security measure wherein the balance between the measure for a valid user and that for an invalid user is considered.

According to an aspect of the invention, there is provided an information processing apparatus including: an authenticating section that authenticates a user; an inputting section that allows the user to input authentication information used for performing the authentication by the authenticating section; an upper-limit retaining section that retains an upper limit indicating a maximum number to which the number of consecutive failures of the authentication is allowed; and an upper-limit decreasing section that decreases the upper limit when trials of the authentication consecutively fail until the number of failures reaches the upper limit.

According to another aspect of the invention, there is provided an authentication processing method including: authenticating a user; and updating an upper limit indicating a maximum number to which the number of consecutive failures of the authentication is allowed, when trials of the authentication consecutively fail until the number of failures reaches the upper limit.

According to the above configuration, it is possible to provide an information processing apparatus and an authentication processing method which realize a security measure wherein the balance between the measure for a valid user and that for an invalid user is considered.

### BRIEF DESCRIPTION OF THE SEVERAL VIEWS OF THE DRAWINGS

A general architecture that implements the various feature of the invention will now be described with reference to the drawings. The drawings and the associated descriptions are provided to illustrate embodiments of the invention and not to limit the scope of the invention.

Fig. 1 is an exemplary diagram showing a system configuration of an information processing apparatus according to an embodiment of the invention;

Fig. 2 is an exemplary diagram showing a module configuration of an authentication control program that operates in the information processing apparatus according to the embodiment;

Fig. 3 is a first view exemplarily showing values in a retry count table for illustrating the flow of the authentication control program that operates in the information processing apparatus according to the embodiment;

Fig. 4 is a second view exemplarily showing values in the retry count table for illustrating the flow of the authentication control program that operates in the information processing apparatus according to the embodiment;

Fig. 5 is a third view exemplarily showing values in the retry count table for illustrating the flow of the authentication control program that operates in the information processing apparatus according to the embodiment;

Fig. 6 is a fourth view exemplarily showing values in the retry count table for illustrating the flow of the authentication control program that operates in the information processing apparatus according to the embodiment;

Fig. 7 is a fifth view exemplarily showing values in the retry count table for illustrating the flow of the authentication control program that operates in the information processing apparatus according to the embodiment;

Fig. 8 is a sixth view exemplarily showing values in the retry count table for illustrating the flow of the authentication control program that operates in the information processing apparatus according to the embodiment;

Fig. 9 is a seventh view exemplarily showing values in the retry count table for illustrating the flow of the authentication control program that operates in the information processing apparatus according to the embodiment;

Fig. 10 is an exemplary flowchart showing the flow of the process in an authentication trial by the authentication control program that operates in the information processing apparatus according to the embodiment;

Fig. 11 is an exemplary flowchart showing the flow of the process in lock cancellation by the authentication control program that operates in the information processing apparatus of the embodiment; and

Fig. 12 is a view exemplarily showing the retry count table for illustrating an application example in the case where the information processing apparatus of the embodiment includes plural authenticating section (authentication modules).

### DETAILED DESCRIPTION

Various embodiments according to the invention will be described hereinafter with reference to the accompanying drawings. In general, according to one embodiment of the invention, An information processing apparatus includes: an authenticating section that authenticates a user; an inputting section that allows the user to input authentication information used for performing the authentication by the authenticating section; an upper-limit retaining section that retains an upper limit indicating a maximum number to which the number of consecutive failures of the authentication is allowed; and an upper-limit decreasing section that decreases the upper limit when trials of the authentication consecutively fail until the number of failures reaches the upper limit.

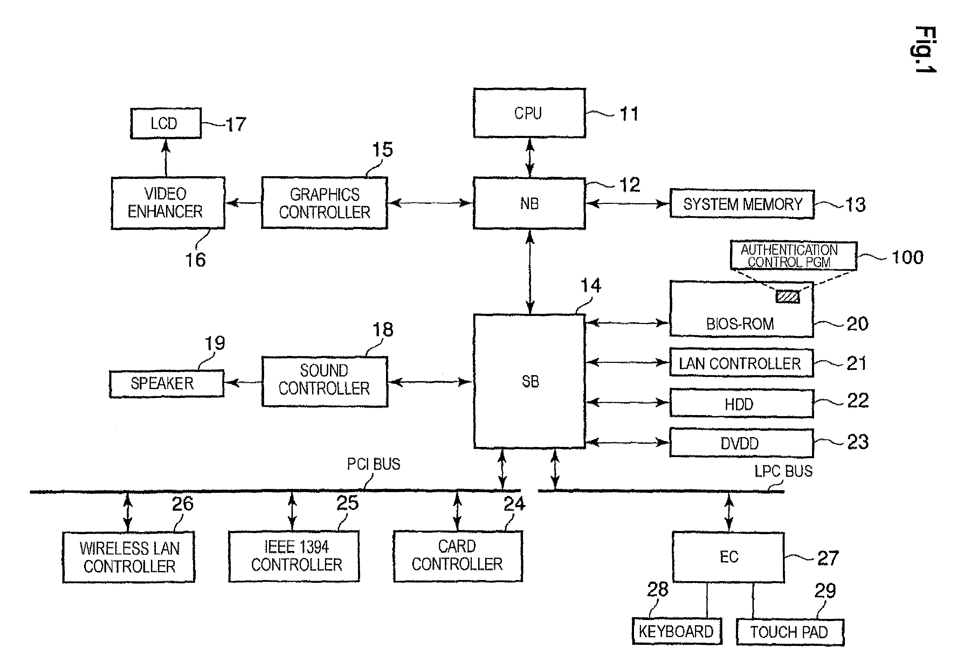

Fig. 1 is an exemplary diagram showing the system configuration of an information processing apparatus according to an embodiment of the invention. The information processing apparatus is realized, for example, as a notebook personal computer.

As shown in Fig. 1, the computer includes a CPU 11, a north bridge (NB) 12, a system memory 13, a south bridge (SB) 14, a graphics controller 15, a video enhancer 16, an LCD 17, a sound controller 18, a speaker 19, a BIOS-ROM 20, a LAN controller 21, a magnetic disk drive (HDD) 22, a DVD drive (DVDD) 23, a card controller 24, an IEEE 1394 controller 25, a wireless LAN controller 26, an embedded controller (EC) 27, a keyboard 28, and a touch pad 29.

The CPU 11 is a processor that controls the operation of the computer, and executes an operating system and various programs such as application programs including utilities that are loaded from the HDD 22 or the DVDD 23 to the system memory 13. The CPU 11 executes also a system BIOS (Basic Input/Output System) stored in the BIOS-ROM 20. The system BIOS is a program for controlling the hardware. The system BIOS includes an authentication control program 100, which will be described below.

The NB 12 is a bridge device that connects between a local bus of the CPU 11 and the SB 14. The NB 12 incorporates a memory controller that controls an access to the system memory 13. The NB 12 has a function of communicating with the graphics controller 15 via an AGP (Accelerated Graphics Port) bus, a serial bus according to the PCI express standard, or the like.

The graphics controller 15 is a display controller that controls the LCD 17 used as a display monitor of the computer. Video data that are produced by the graphics controller 15 are sent to the video enhancer 16 to be subjected to a video process (image quality adjusting process) that enhances the image quality of the video data. The video data in which the image quality is enhanced by the video enhancer 16 are sent to the LCD 17.

The SB 14 controls devices on an LPC (Low Pin Count) bus and a PCI (Peripheral Component Interconnect) bus. The SB 14 incorporates an IDE (Integrated Drive Electronics) controller for controlling the HDD 22 and the DVDD 23. The SB 14 has a function of communicating with the sound controller 18.

The sound controller 18 is a sound source device, and outputs audio data which are to be reproduced, to the speaker 19.

The card controller 24 controls a card such as a PC card or an SD (Secure Digital) card. The IEEE 1394 controller 25 performs communications with external apparatuses via a serial bus according to the IEEE 1394 standard. The wireless LAN controller 26 is a wireless communication device which performs wireless communication according to, for example, the IEEE 802.11 standard. The EC 27 is a one-chip microcomputer into which an embedded controller for managing the electric power, and a keyboard controller for controlling the keyboard 28 and the touch pad 29 are integrated. The EC 27 has a function of powering on/off the computer in accordance with a user's operation of a power button.

The authentication control program 100 is a program for governing user authentication in the configured computer. Because of the function of the authentication control program 100, the computer realizes a security measure wherein the balance between the measure for a valid user and that for an invalid user is considered. Hereinafter, this will be described in detail.

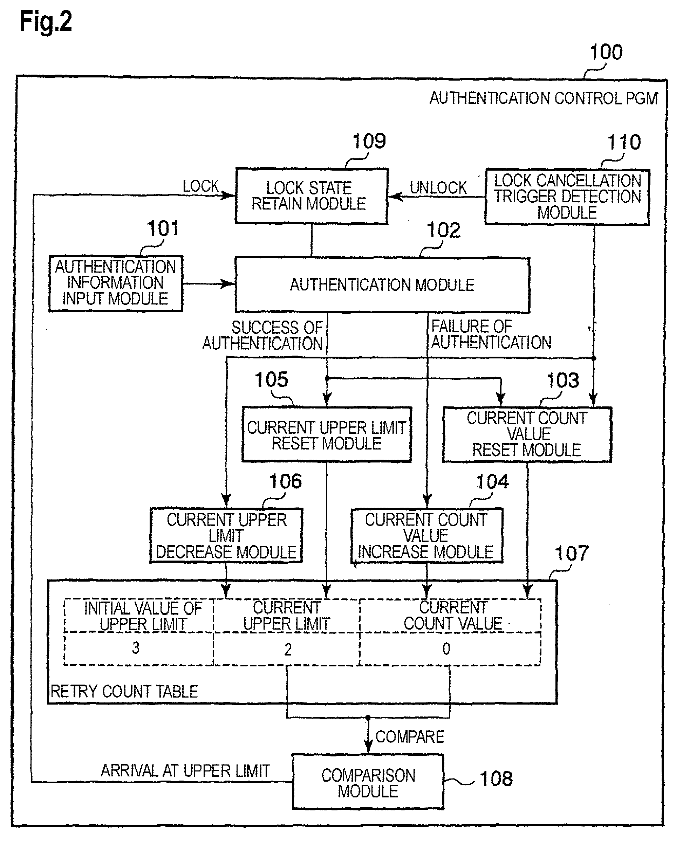

Fig. 2 is an exemplary diagram showing a module configuration of the authentication control program 100. As shown in Fig. 2, the authentication control program 100 has an authentication information input module 101, an authentication module 102, a current-count value reset module 103, a current-count value increase module 104, a current-upper limit reset module 105, a current-upper limit decrease module 106, a retry count table 107, a comparison module 108, a lock state retain module 109, and a lock cancellation trigger detection module 110.

The authentication information input module 101 is a module through which the user inputs information for the user authentication, and corresponds to a control module such as a keyboard in the case of an apparatus in which authentication is conducted on the basis of a password character string, or a fingerprint sensor in the case of an apparatus in which fingerprint authentication is performed. The authentication module 102 checks the validity of the information inputted through the authentication information input module 101, to determine whether the user is a valid user or not.

The retry count table 107 retains three kinds of values, "initial value of upper limit", "current upper limit", and "current count value". In "current count value", the number at which the user has consecutively failed an authentication trial up to the current time is retained. The minimum value retained here is "0", and the maximum value is the value retained as "current upper limit". In "current upper limit", the current value of the upper limit consecutive trial number is retained. When the value "2" is retained here, for example, the user can consecutively perform the authentication trial two times, but, if the user consecutively fails the trial two times, the user is requested to conduct an operation of resetting the count value (for example, rebooting the apparatus) before the next authentication is performed. In accordance with a certain algorithm, "current upper limit" is updated. The minimum value of the "current upper limit" is "1", the maximum value is the same value retained as "initial value of upper limit". In "initial value of upper limit", an initial value of the value which is to be retained in "current upper limit" is stored. This initial value is a fixed value.

The current-count value reset module 103 and the current-upper limit reset module 105 receive a notification indicating that the authentication has succeeded, from the authentication module 102, and respectively reset "current count value" in the retry count table 107 to "0", and "current upper limit" to the value stored in "initial value of upper limit". On the other hand, upon receiving from the authentication module 102 a notification indicating that the authentication has failed, the current-count value increase module 104 increases "current count value" in the retry count table 107 by 1.

The comparison module 108 compares "current count value" in the retry count table 107 with "current upper limit". If the former reaches the value of the latter, the comparison module determines that the count value reaches the upper limit consecutive trial number, and produces a trigger which causes the apparatus to transfer to the lock state so as not to further perform the authentication trial. The lock state retain module 109 retains information indicating that the computer is currently in "locked" or "not locked". When receiving a notification from the comparison module 108, the state is updated to "locked". When receiving a notification from the lock cancellation trigger detection module 110 which will be described below, the state is updated to "not locked".

When any operation of canceling the lock state (for example, rebooting by the user) is conducted on the computer in the lock state, the lock cancellation trigger detection module 110 detects the operation, and changes the information retained by the lock state retain module 109 to "not locked". At the same time, a notification is sent to the current-count value reset module 103 to cause "current count value" in the retry count table 107 to be returned to "0".

Then, the current-upper limit decrease module 106 receives the notification from the lock cancellation trigger detection module 110, and decreases "current upper limit" in the retry count table 107 by 1. The minimum value of "current upper limit" is "1". When "current upper limit" is already "1", therefore, the value change is not performed.

Next, the flow of the operation of the authentication control program 100 having the module configuration will be described with using a specific numerical example.

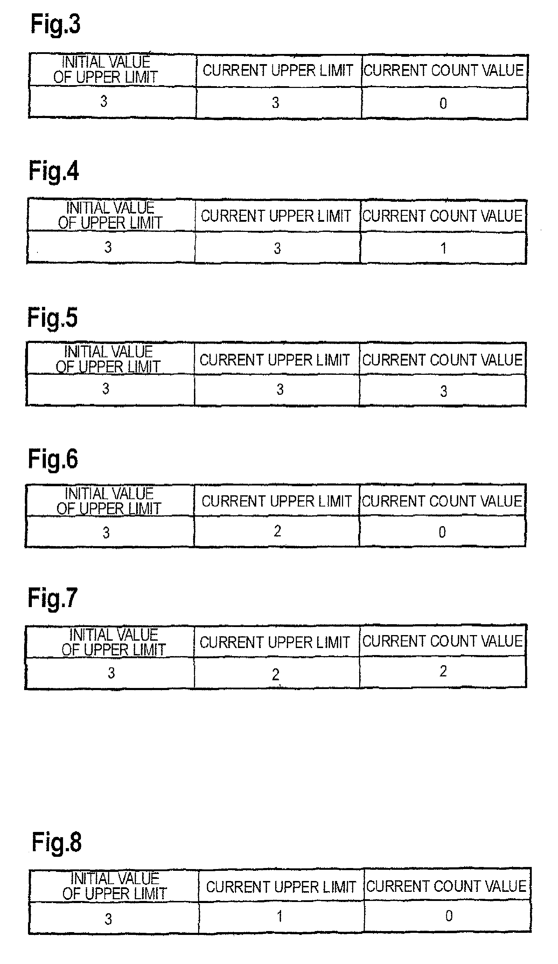

An apparatus in which "initial value of upper limit" in the retry count table 107 is "3" will be considered. Upon purchase of this product, namely, the values in the retry count table 107 are as shown in Fig. 3.

Thereafter, the user registers authentication information, and performs an authentication trial. When the user fails the authentication trial, "current count value" is incremented by the current-count value increase module 104 as shown in Fig. 4.

When the user continues to fail the authentication trial, "current count value" is continuingly incremented. At the time when the user fails three times in total, the value is equal to "current upper limit" as shown in Fig. 5. When this state is produced, the comparison module 108 detects this, and the state retained by the lock state retain module 109 is rewritten to "locked", thereby disabling the authentication trial from being further performed.

In order to continue the authentication trial, the user must conduct a physical operation (for example, rebooting the apparatus) for canceling the lock. When the operation is conducted, the lock cancellation trigger detection module 110 detects this, and resets "current count value" through the current-count value reset module 103. At the same time, "current upper limit" is decremented through the current-upper limit decrease module. Fig. 6 shows the values in the retry count table 107 at this time.

From this state, the user can again perform the authentication trial. However, the value of "current upper limit" is "2", and therefore the upper limit of the number of authentication trials which can be consecutively performed is two which is smaller by one than three that has been set. If the authentication trial consecutively fails two times, "current count value" is equal to "current upper limit" as shown in Fig. 7.

The comparison module 108 detects this, and, as a result of a flow, which is similar to the previous flow, "current upper limit" is further decremented as shown in Fig. 8. In this state, when the user fails the authentication trial simply one time, the state is locked, and the operation of canceling the lock state is required each time when the trial fails. However, the minimum value of "current upper limit" is "1". Even when the user conducts the operation of canceling the lock state, therefore, the current-upper limit decrease module 106 does not further decrement "current upper limit".

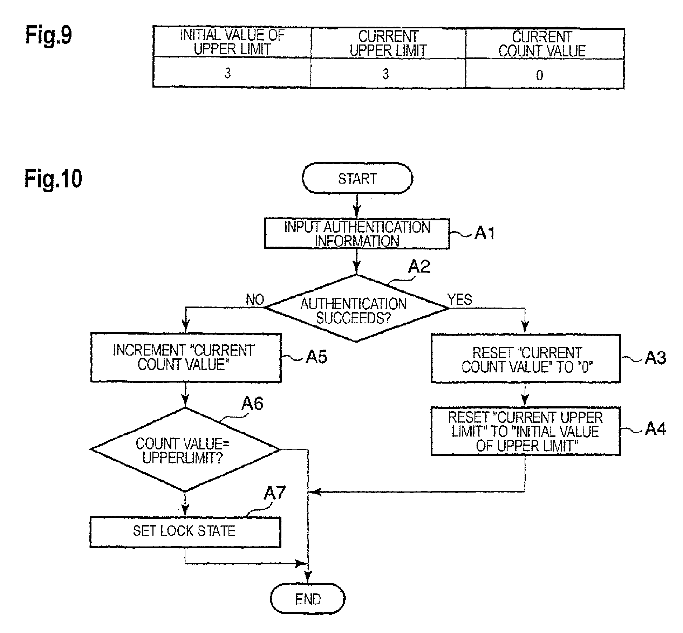

When the user passes the authentication, this is notified to the current-count value reset module 103, and "current count value" is returned to "0". At the same time, this is notified also to the current-upper limit reset module 105, "current upper limit" is reset to the same value as "initial value of upper limit". As a result, the values of the table are returned to the same ones as those upon purchase as shown in Fig. 9.

In this way, "current upper limit" has initially a large value. Even when the valid user happens to fail the authentication, therefore, the chance of locking the state is small. When the user continues to fail the authentication, however, the frequency of occurrence of the lock state is accelerated, and the state where locking is performed each time when the user fails the authentication is finally produced. According to the configuration, in a case such as that a malicious third party repeats an unauthorized authentication trial, the efficiency of the trial is extremely lowered, and an effect of enhancing the security property is expected.

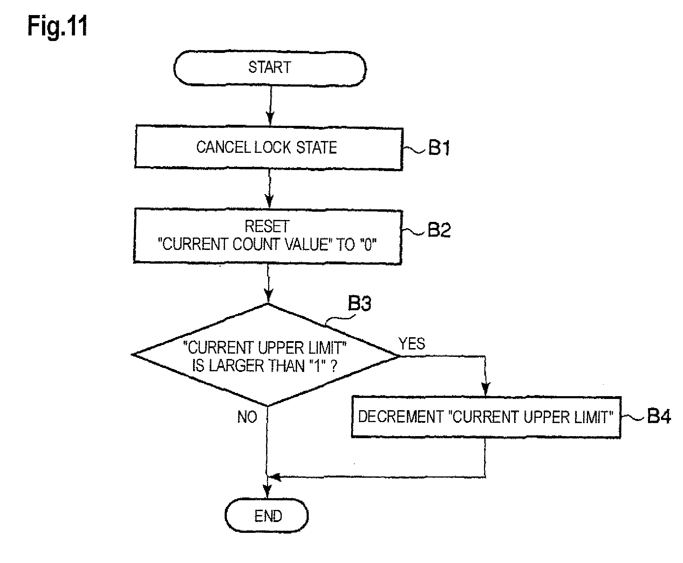

Fig. 10 is an exemplary flowchart showing the flow of the process in an authentication trial by the authentication control program 100, and Fig. 11 is an exemplary flowchart showing the flow of the process in lock cancellation by the authentication control program 100.

When the authentication information input module 101 inputs authentication information (block A1), the authentication module 102 determines the validity of the information (block A2). If the authentication succeeds (YES at block A2), the current-count value reset module 103 resets "current count value" in the retry count table 107 to "0" (block A3), and the current-upper limit reset module 105 resets "current upper limit" to "initial value of upper limit" (block A4). The current-upper limit reset module 105 may increase "current upper limit" by one or more.

By contrast, if the authentication fails (NO at block A2), the current-count value increase module 104 increments "current count value" in the retry count table 107 (block A5), and the comparison module 108 determines whether "current count value" reaches "current upper limit" as result of the incrementation or not (block A6). If reaches the upper limit (YES at block A6), the state of the apparatus is transferred to the lock state so as not to perform a further authentication trial, and the lock state retain module 109 retains this state (block A7).

When the operation of canceling the lock state is conducted (block B1), the current-count value reset module 103 resets "current count value" in the retry count table 107 to "0" (block B2). If "current upper limit" is larger than "1" (YES at block B3), the current-upper limit decrease module 106 decrements this "current upper limit" (block B4).

An application example in the case where one information processing apparatus includes plural authenticating section (authentication modules 102) will be described below. This is the case where authentication can be conducted, for example, on the basis of a password character string inputted through the keyboard, fingerprint information which is obtained by pressing a finger against a sensor, and also reading of an IC card.

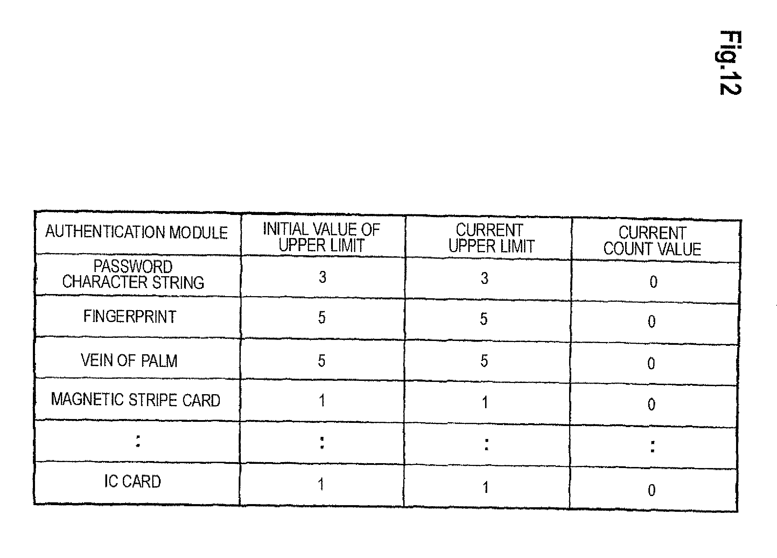

In the apparatus, the retry count table 107 is configured so as to separately retain values for each of the authenticating section. An example of the retry count table in the apparatus that provides plural authenticating section is shown in Fig. 12.

As exemplarily shown in Fig. 12, in the case where plural authenticating section are provided, sets of "initial value of upper limit", "current upper limit", and "current count value" are separately retained by the plural authenticating section, respectively. With respect to "initial value of upper limit", different values may be set for the respective authenticating section. In the example of Fig. 12, "3" is set for authentication based on a password character string, "5" is set for authentication using biological information such as a fingerprint or a vein pattern, and "1" is set for authentication using a token such as a magnetic stripe card or an IC card.

The configuration in which "initial value of upper limit" is changed in accordance with the physical characteristics of the authenticating section has a significant meaning in maintaining of a balance between the security property and the usability.

In the case of authenticating section using a password character string or biological information, it is not uncommon that even a valid user fails to pass authentication in one trial, because there is case where a typing error occurs in inputting of a password character string, or the body portion cannot be situated in a position which is appropriate with respect to a sensor for reading biological information. When "initial value of upper limit" for such authenticating section is set to "1", therefore, the lock state frequently occurs even in the case of a valid user, and the usability is extremely lowered.

By contrast, in the case of authenticating section using a token such as a magnetic stripe card or an IC card, "initial value of upper limit" is preferably set to an extremely small value such as "1". In the case where authentication information is stored in an industrial product such as a token and authentication is performed with using the information, the possibility that authentication is failed even for a regular token is substantially negligible in view of the quality level of usual modern industrial products. It is a matter of course that, when a token is broken, the token does not pass authentication. In this case, even when the trial is repeated many times with using the broken token, the token does not pass authentication. Therefore, this case is beyond the range where a failure is remedied by the concept of retry count, and hence ignorable. In consideration of the above, by setting "initial value of upper limit" to an extremely small value, the security property of the apparatus can be enhanced without impairing the usability of a valid user.

As described above, the information processing apparatus of the embodiment can realize a security measure wherein the balance between the measure for a valid user and that for an invalid user is considered.

The authentication control described above may be applied to an access control of data acquisition of a web content.

The invention is not limited to the foregoing embodiments but various changes and modifications of its components may be made without departing from the scope of the present invention. Also, the components disclosed in the embodiments may be assembled in any combination for embodying the present invention. For example, some of the components may be omitted from all the components disclosed in the embodiments. Further, components in different embodiments may be appropriately combined.

## Claims

1. An information processing apparatus comprising:
an authenticating section that authenticates a user;
an inputting section that allows the user to input authentication information used for performing the authentication by the authenticating section;
an upper-limit retaining section that retains an upper limit indicating a maximum number to which the number of consecutive failures of the authentication is allowed; and
an upper-limit decreasing section that decreases the upper limit when trials of the authentication consecutively fail until the number of failures reaches the upper limit.

2. The information processing apparatus according to claim 1, wherein, each time when the number of consecutive failures of the authentication reaches the upper limit, the upper-limit decreasing section decreases the upper limit.

3. The information processing apparatus according to claim 1, further comprising:
a locking section that, when the number of consecutive failures of the authentication reaches the upper limit, sets the information processing apparatus to a lock state, in which the input of the authentication information by the inputting section is disabled; and
a lock canceling section that cancels the lock state by the locking section, and
wherein, when the lock state is canceled by the lock canceling section, the upper-limit decreasing section decreases the upper limit.

4. The information processing apparatus according to claim 1, further comprising an upper-limit resetting section that, when the authentication succeeds, increases the upper limit.

5. The information processing apparatus according to claim 4, further comprising an initial-value retaining section that retains an initial value of the upper limit that is to be retained in the upper-limit retaining section at initial state,
wherein the upper-limit resetting section that, when the authentication succeeds, returns the upper limit to the initial value.

6. The information processing apparatus according to claim 1,
wherein the authentication section includes a plurality of authenticating units, each of which authenticates a user in using an authenticating method different with one another,
wherein the upper-limit retaining section includes a plurality of upper-limit retaining units, each of which retains upper-limit indicating the number of consecutive failures of the authenticating section, respectively, and
wherein the upper-limit decreasing section includes a plurality of upper-limit decreasing units, each of which decreases the upper limit when trials of the authentication consecutively fail until the number of failures reaches the upper limit, respectively.

7. The authentication apparatus according to claim 1, wherein the inputting section includes key board that allows the user to input password.

8. The authentication apparatus according to claim 1, wherein the inputting section includes a fingerprint sensor that allows the user to input fingerprint information of the user.

9. An authentication processing method comprising:
authenticating a user; and
updating an upper limit indicating a maximum number to which the number of consecutive failures of the authentication is allowed, when trials of the authentication consecutively fail until the number of failures reaches the upper limit.

10. The authentication processing method according to claim 9, wherein the step of updating includes increasing the upper limit.

11. The authentication processing method according to claim 9, wherein the step of updating includes decreasing the upper limit.

12. The authentication processing method according to claim 9, further comprising:
locking the authentication not to be performed, when the number of consecutive failures of the authentication reaches the upper limit; and
canceling the lock locked by the locking step,
wherein when the locking is canceled by the canceling step, the updating step decreases the upper limit.

13. The authentication processing method according to claim 9, further comprising increasing the upper limit, when the authentication succeeds.

14. The authentication processing method according to claim 13, wherein the increasing step returns the upper limit to an initial value.

15. A computer program product for enabling a computer to have a user authenticating function, comprising:
software instructions for enabling the computer to perform predetermined operations, and
a computer readable medium bearing the software instructions;
the predetermined operations including:
authenticating a user;
receiving authentication information used for performing the authentication;
retaining an upper limit indicating a maximum number to which the number of consecutive failure of the authentication is allowed; and
when the authentication consecutively fails until the number of trials reaches the upper limit retained by the retaining step of the upper limit, decreasing the upper limit.

16. The computer program product according to claim 15, wherein each time when the number of consecutive failures of the authentication reaches the upper limit, the decreasing step decreases the upper limit.

17. The computer program product according to claim 15, wherein the predetermined operations further include:
when the number of consecutive failures of the authentication reaches the upper limit, setting the computer to a lock state, in which the inputting of the authentication information is disabled; and
canceling the lock state by the locking step, and
wherein, when the lock state is canceled by the canceling step, the decreasing step decreases the upper limit.

18. The computer program product according to claim 15, wherein the predetermined operations further include increasing the upper limit, when the authentication succeeds.

19. The computer program product according to claim 15,
wherein the predetermined operations further include retaining an initial value of the upper limit that is to be retained at the retaining step of the upper limit at an initial state, and
wherein the increasing step returns the upper limit to the initial value.
